# NOUVEAU FASCICULE DE BREVET EUROPEEN

(11) **EP 3 673 164 B2**
(45) Date de publication et mention de la décision concernant l'opposition: **03.04.2024**
(45) Mention de la délivrance du brevet: 14.04.2021
(21) Numéro de dépôt: 18769757.8
(22) Date de dépôt: 24.08.2018
(51) Int. Cl.: F02C 7/06, F02K 3/06, F01D 25/16

(54) **TURBORÉACTEUR À DOUBLE CORPS AYANT UN PALIER DE BUTÉE D'ARBRE BASSE PRESSION POSITIONNÉ DANS LE CARTER D'ÉCHAPPEMENT**
ZWEIWELLEN-MANTELSTROM-TRIEBWERK MIT EINEM NIEDERDRUCKWELLENSCHUBLAGER IM ABGASGEHÄUSE
TWIN-SPOOL TURBOJET ENGINE HAVING A LOW-PRESSURE SHAFT THRUST BEARING POSITIONED IN THE EXHAUST CASING

(30) Priorité: 25.08.2017 FR 1757881
(43) Date de publication de la demande: 01.07.2020
(73) Titulaire: Safran Aircraft Engines, 75015 Paris (FR)
(72) Inventeur: KUBIAK, Guillaume Patrice, 77550 Moissy-Cramayel (FR); BORDONI, Nils Edouard Romain, 77550 Moissy-cramayel (FR); BRAULT, Michel Gilbert Roland, 77550 Moissy-cramayel (FR); CUVILLIER, Romain Guillaume, 77550 Moissy-cramayel (FR); NEGRI, Arnaud Nicolas, 77550 Moissy-Cramayel (FR); NOWAKOWSKI, Nathalie, 77550 Moissy-Cramayel (FR)
(74) Mandataire: Regimbeau
(86) Numéro de dépôt international: PCT/FR2018/052101
(87) Numéro de publication internationale: WO 2019/038510

(56) Documents cités:
- WO-A1-2014/197155
- WO-A1-2017/109330

## Description

### DOMAINE DE L'INVENTION

L'invention concerne un turboréacteur à double corps, et plus particulièrement un turboréacteur à double corps à double flux à réducteur présentant un taux de dilution élevé (turbofan).

### ETAT DE LA TECHNIQUE

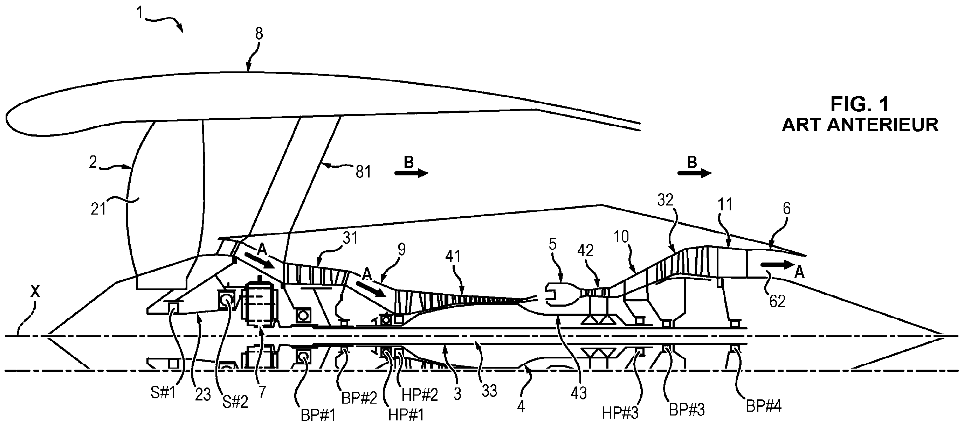

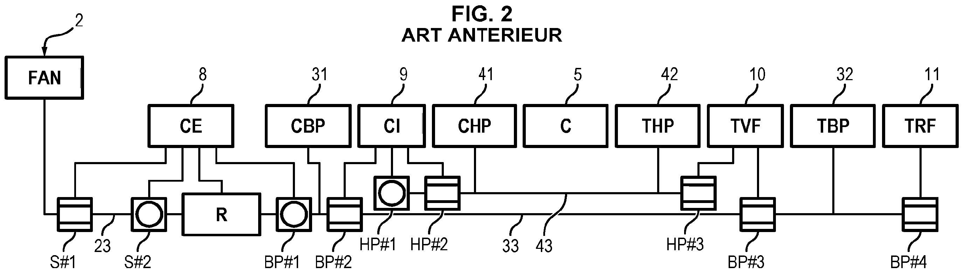

Les figures 1 et 2 représentent de manière schématique un exemple de turboréacteur 1 à double corps à double flux à réducteur.

Le turboréacteur 1 illustré sur ces figures comprend une soufflante 2, un corps basse pression 3, un corps haute pression 4, une chambre de combustion 5 et une tuyère d'échappement des gaz 6.

Le corps haute pression 4 comprend un compresseur haute pression 41, une turbine haute pression 42 et un arbre haute pression 43 couplant la turbine haute pression 42 au compresseur haute pression 41.

Le corps basse pression 3 comprend un compresseur basse pression 31, une turbine basse pression 32 et un arbre basse pression 33 couplant la turbine basse pression 32 au compresseur basse pression 31, et s'étendant à l'intérieur de l'arbre haute pression 43.

La turbine haute pression 42 entraine en rotation le compresseur haute pression 41 par l'intermédiaire de l'arbre haute pression 43, tandis que la turbine basse pression 32 entraine en rotation le compresseur basse pression 31 et la soufflante 2 par l'intermédiaire de l'arbre basse pression 33.

Le turboréacteur 1 illustré sur les figures 1 et 2 est un turboréacteur à double flux présentant un taux de dilution (en anglais « bypass ratio ») élevé, le taux de dilution étant défini comme le rapport entre le débit du flux secondaire B (froid) et le débit du flux primaire A (chaud).

Pour atteindre un tel taux de dilution, la soufflante 2 est découplée de la turbine basse pression 32, permettant ainsi d'optimiser indépendamment leurs vitesses de rotation respectives. Le découplage est par exemple obtenu à l'aide d'un réducteur 7, tel qu'un train épicycloïdal (en anglais « epicyclic gearing »), disposé entre l'extrémité amont de l'arbre basse pression 33 et la soufflante 2. La soufflante 2 est entrainée par l'arbre basse pression 33 par l'intermédiaire du réducteur 7 et d'un arbre supplémentaire 23, appelé arbre de soufflante.

Ce découplage permet de réduire la vitesse de rotation et le rapport de pression de la soufflante (en anglais «fan pressure ratio »), et ainsi d'augmenter la puissance extraite par la turbine basse pression. Grâce au réducteur, l'arbre basse pression peut tourner à des vitesses de rotation plus élevées que dans les turboréacteurs conventionnels.

Cette disposition permet d'améliorer le rendement propulsif du turboréacteur et de réduire sa consommation de carburant, ainsi que le bruit émis par la soufflante.

Comme illustré sur les figures 1 et 2, l'arbre de soufflante 23, l'arbre basse pression 33 et l'arbre haute pression 43 sont guidés en rotation par rapport aux parties structurelles du turboréacteur 1 (ces parties structurelles incluant notamment le carter d'entrée, le carter inter-compresseur, le carter inter-turbine et le carter d'échappement) par le biais de différents paliers.

Plus précisément, chaque arbre est supporté par un premier palier (ou palier de butée), capable de supporter à la fois des efforts radiaux et des efforts axiaux s'exerçant sur l'arbre, et par un ou plusieurs palier(s) additionnel(s) capables de supporter uniquement des efforts radiaux s'exerçant sur l'arbre.

En particulier, sur les figures 1 et 2, l'arbre de soufflante 23 est supporté par un premier palier de soufflante S#1 (palier amont) et un deuxième palier de soufflante S#2 (palier aval) disposés entre l'arbre de soufflante 23 et le carter d'entrée 8. Dans l'exemple illustré sur les figures 1 et 2, le deuxième palier S#2 est un palier « de butée », c'est-à-dire qu'il est capable de supporter les efforts axiaux exercés (vers l'amont) par la soufflante 2 sur l'arbre de soufflante 23.

L'arbre basse pression 33 est supporté par quatre paliers, incluant un premier palier BP#1, disposé entre l'arbre basse pression 33 et le carter d'entrée 8 (à proximité de l'extrémité amont de l'arbre basse pression), un deuxième palier BP#2 disposé entre l'arbre basse pression 33 et le carter inter-compresseur 9, un troisième palier BP#3, disposé entre l'arbre basse pression 33 et le carter inter-turbine 10, et un quatrième palier BP#4, disposé entre l'arbre basse pression 33 et le carter d'échappement 11. Le premier palier BP#1 est un palier « de butée », c'est-à-dire qu'il est capable de supporter les efforts axiaux exercés (vers l'aval) par la turbine basse pression 3 sur l'arbre basse pression 33.

L'arbre haute pression 43 est supporté par trois paliers, incluant un premier palier HP#1, disposé entre l'arbre haute pression 43 et le carter inter-compresseur 9 (à proximité de l'extrémité amont de l'arbre haute pression), un deuxième palier HP#2 disposé entre l'arbre haute pression 43 et le carter inter-compresseur 9, un troisième palier HP#3, disposé entre l'arbre haute pression 43 et le carter inter-turbine 10. Le premier palier HP#1 est également un palier « de butée », c'est-à-dire qu'il est capable de supporter les efforts axiaux exercés (vers l'aval) par la turbine haute pression 41 sur l'arbre haute pression 43.

Dans une telle architecture, du fait de la présence du réducteur 7 et du découplage de la soufflante 2 et de la turbine basse pression 32, les efforts axiaux exercés par la turbine basse pression 32 ne sont pas compensés par les efforts axiaux exercés par la soufflante 2. Il en résulte que le premier palier BP#1 doit être dimensionné pour résister à des efforts axiaux élevés. Ce palier présente par conséquent un encombrement important.

Or l'encombrement du premier palier BP#1 rend difficile l'intégration de ce palier au centre du compresseur basse pression 31.

En outre, l'intégration du réducteur 7 et du palier BP#1 impose de modifier la forme de la veine primaire servant à guider le flux primaire A.

Le document WO2014197155A1 décrit un turboréacteur à double corps dans lequel l'arbre basse pression est supporté par un premier palier de butée disposé, en amont, entre l'arbre basse pression et l'arbre haute pression, et un deuxième palier disposé, en aval, entre l'arbre basse pression et le carter du compresseur basse pression.

Le document WO2017109330A1 décrit un turboréacteur à double corps dans lequel l'arbre basse pression est supporté par un palier de butée disposé, en amont, entre l'arbre basse pression et le carter inter-compresseur, et deux paliers disposés, en aval, entre l'arbre basse pression et le carter d'échappement.

### RESUME DE L'INVENTION

Un but de l'invention est de proposer un turboréacteur à double corps présentant un agencement qui facilite l'intégration du palier de butée d'arbre basse pression au sein du turboréacteur.

Selon un premier aspect, ce but est atteint dans le cadre de la présente invention grâce à un turboréacteur à double corps selon la revendication 1.

Dans un tel agencement, le palier de butée d'arbre basse pression peut être disposé à proximité de l'extrémité aval de l'arbre basse pression, au centre du carter d'échappement, où l'on dispose de plus d'espace.

Cet agencement peut également permettre la suppression d'un ou plusieurs palier(s) basse pression (par exemple le quatrième palier BP#4 sur les figures 1 et 2).

Enfin, cet agencement permet de réduire les déplacements axiaux relatifs entre le rotor et le stator de la turbine basse pression dus aux dilatations des différentes pièces du turboréacteur lorsque celui-ci est en fonctionnement.

Par ailleurs, l'agencement proposé permet de ne pas modifier la forme de la veine primaire.

Le turboréacteur proposé peut en outre présenter les caractéristiques suivantes :
- le turboréacteur peut comprendre en outre au plus deux paliers d'arbre basse pression additionnels, chaque palier d'arbre basse pression additionnel comprenant une bague intérieure et une bague extérieure, l'une des bagues étant fixée sur l'arbre basse pression et l'autre des bagues étant fixée sur un carter du turboréacteur,
- le turboréacteur peut comprendre en outre un unique palier d'arbre basse pression additionnel, le palier d'arbre basse pression additionnel comprenant une bague intérieure et une bague extérieure, l'une des bagues étant fixée sur l'arbre basse pression et l'autre des bagues étant fixée sur un carter du turboréacteur,
- chaque palier d'arbre basse pression additionnel peut comprendre une bague intérieure ou une bague extérieure fixée sur un carter inter-compresseur ou un carter inter-turbine du turboréacteur,
- le déplacement axial autorisé peut être compris entre 1 millimètre et 2 centimètres, de préférence entre 2 millimètres et 1 centimètre,
- dans un autre mode de réalisation, la surface interne du carter de compresseur basse pression peut présenter une forme cylindrique de révolution, ayant l'axe de rotation de l'arbre basse pression pour axe de révolution,
- l'arbre basse pression peut présenter une extrémité amont munie de cannelures et le mécanisme de réduction peut comprendre un arbre d'entrée présentant une extrémité munie de cannelures, les cannelures de l'arbre d'entrée du mécanisme de réduction coopérant avec les cannelures de l'arbre basse pression de manière à rendre les deux arbres solidaires en rotation tout en autorisant une translation de l'un des arbres par rapport à l'autre,
- le compresseur basse pression comprend un disque amont de compresseur basse pression ayant un alésage présentant un premier rayon, et dans lequel le premier palier de butée d'arbre basse pression présente un deuxième rayon tel que : D2 > 0,70 x D1, de préférence D2 > 0,75 x D1, où D1 est le premier rayon et D2 est le deuxième rayon.

### PRESENTATION DES DESSINS

D'autres caractéristiques et avantages ressortiront encore de la description qui suit, laquelle est purement illustrative et non limitative et doit être lue en regard des figures annexées, parmi lesquelles :
- la figure 1, déjà commentée, représente de manière schématique, en coupe longitudinale, un exemple de turboréacteur à double corps conventionnel,
- la figure 2, déjà commentée, est un diagramme représentant de manière schématique, l'agencement des différents paliers dans le turboréacteur de la figure 1,
- la figure 3 représente de manière schématique, en coupe longitudinale, un turboréacteur à double corps conforme à un premier mode de réalisation de l'invention,
- la figure 4 est un diagramme représentant de manière schématique, l'agencement des différents paliers dans le turboréacteur de la figure 3,
- la figure 5 représente de manière schématique, en coupe longitudinale, un turboréacteur à double corps conforme à un deuxième mode de réalisation de l'invention,
- la figure 6 est un diagramme représentant de manière schématique, l'agencement des différents paliers dans le turboréacteur de la figure 5,
- la figure 7 représente de manière schématique, en coupe longitudinale, un turboréacteur à double corps conforme à un troisième mode de réalisation de l'invention,
- la figure 8 est un diagramme représentant de manière schématique, l'agencement des différents paliers dans le turboréacteur de la figure 7,
- la figure 9 représente de manière schématique, en coupe longitudinale, un turboréacteur à double corps conforme à un quatrième mode de réalisation de l'invention,
- la figure 10 est un diagramme représentant de manière schématique, l'agencement des différents paliers dans le turboréacteur de la figure 9,
- la figure 11 représente de manière schématique, en coupe longitudinale, un turboréacteur à double corps conforme à un cinquième mode de réalisation de l'invention,
- la figure 12 est un diagramme représentant de manière schématique, l'agencement des différents paliers dans le turboréacteur de la figure 11,
- la figure 13 représente de manière schématique, en coupe longitudinale, un turboréacteur à double corps conforme à un sixième mode de réalisation de l'invention,
- la figure 14 est un diagramme représentant de manière schématique, l'agencement des différents paliers dans le turboréacteur de la figure 13,
- la figure 15 représente de manière schématique, en coupe longitudinale, un turboréacteur à double corps conforme à un septième mode de réalisation de l'invention,
- la figure 16 est un diagramme représentant de manière schématique, l'agencement des différents paliers dans le turboréacteur de la figure 15,
- la figure 17 illustre de manière schématique l'agencement des aubes fixes et des aubes mobiles dans un carter de compresseur basse pression conventionnel,
- la figure 18 représente de manière schématique l'agencement des aubes fixes et des aubes mobiles dans un carter de compresseur basse pression, conforme à une première possibilité,
- les figures 19 et 20 représentent de manière schématique l'agencement des aubes fixes et des aubes mobiles dans un carter de compresseur basse pression, conforme à une deuxième possibilité,
- la figure 21 représente de manière schématique, en coupe longitudinale, un turboréacteur à double corps conforme à un huitième mode de réalisation de l'invention,
- la figure 22 représente de manière schématique, en coupe longitudinale, un premier ensemble d'accouplement,
- la figure 23 représente de manière schématique, en coupe longitudinale, un deuxième ensemble d'accouplement.

### DESCRIPTION DETAILLEE DES MODES DE REALISATION

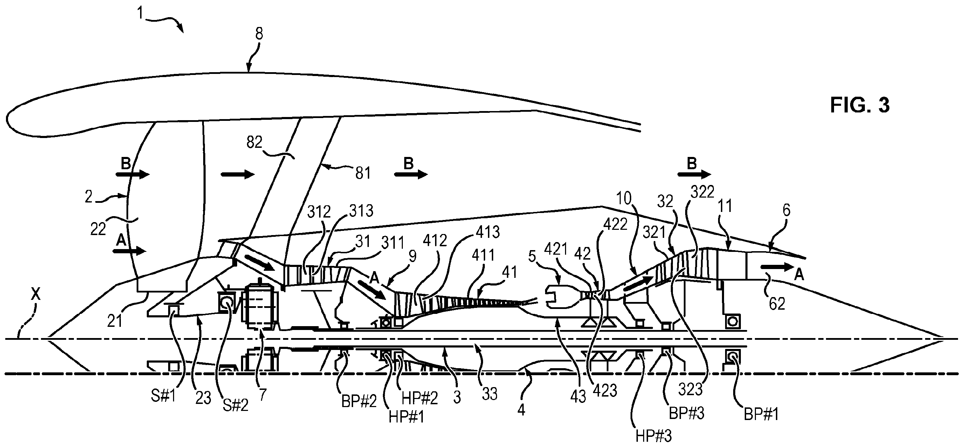

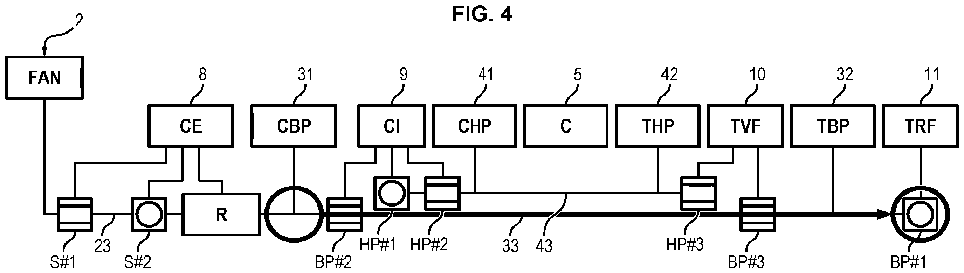

Sur les figures 3 et 4, le turboréacteur 1 représenté comprend une soufflante 2, un corps basse pression 3, un corps haute pression 4, une chambre de combustion 5 et une tuyère d'échappement des gaz 6.

La soufflante 2 comprend un disque de soufflante 21 pourvu d'aubes de soufflante 22 à sa périphérie qui, lorsqu'elles sont mises en rotation, entrainent le flux d'air dans les espaces d'écoulement primaire et secondaire du turboréacteur 1.

Le corps basse pression 3 comprend un compresseur basse pression 31, une turbine basse pression 32 et un arbre basse pression 33 couplant la turbine basse pression 32 au compresseur basse pression 31.

Le corps haute pression 4 comprend un compresseur haute pression 41, une turbine haute pression 42 et un arbre haute pression 43 couplant la turbine haute pression 42 au compresseur haute pression 43.

L'arbre basse pression 33 s'étend à l'intérieur de l'arbre haute pression 43. L'arbre basse pression 33 et l'arbre haute pression 43 sont coaxiaux. L'arbre basse pression 33 et l'arbre haute pression 43 ont pour axe de rotation, l'axe X, qui est également l'axe longitudinal du turboréacteur 1.

La turbine haute pression 42 entraine en rotation le compresseur haute pression 41 par l'intermédiaire de l'arbre haute pression 43, tandis que la turbine basse pression 32 entraine en rotation le compresseur basse pression 31 et la soufflante 2 par l'intermédiaire de l'arbre basse pression 33.

L'expression « double corps » signifie que le turboréacteur comprend uniquement deux corps (corps 3 et 4), chaque corps étant constitué d'un compresseur, d'une turbine et d'un arbre couplant la turbine au compresseur. Un turboréacteur à double corps se distingue par exemple d'un turboréacteur « triple corps » qui comprend un corps basse pression, un corps haute pression et un corps intermédiaire intercalé entre le corps haute pression et le corps basse pression.

Le turboréacteur 1 comprend en outre un arbre de soufflante 23 et un réducteur 7, couplant l'arbre de soufflante 23 à l'arbre basse pression 33. Le disque de soufflante 21 est monté fixe sur l'arbre de soufflante 23 de sorte que le disque de soufflante 21 est entrainé en rotation par l'arbre basse pression 33 par l'intermédiaire du réducteur 7 et de l'arbre de soufflante 23.

Le compresseur basse pression 31 comprend un carter de compresseur basse pression 311, un stator 312 et un rotor 313. Le stator 312 comprend des aubes de stator 314 montées fixes sur le carter 311. Le rotor 313 comprend des aubes de rotor 315 propres à être entrainées en rotation par rapport aux aubes de stator par le biais de l'arbre basse pression 33. A cet effet, les aubes de rotor sont montées fixes sur l'arbre basse pression 33. Les aubes de rotor s'étendent dans la veine de circulation du flux primaire A en étant intercalées entre les aubes fixes.

De manière similaire, le compresseur haute pression 41 comprend un carter de compresseur haute pression 411, un stator 412 et un rotor 413. Le stator 412 comprend des aubes de stator montées fixes sur le carter 411. Le rotor 413 comprend des aubes de rotor propres à être entrainées en rotation par rapport aux aubes de stator par le biais de l'arbre haute pression 43. A cet effet, les aubes de rotor sont montées fixes sur l'arbre haute pression 43. Les aubes de rotor s'étendent dans la veine de circulation du flux primaire A en étant intercalées entre les aubes fixes.

La turbine basse pression 32 comprend un carter de turbine basse pression 321, un stator 322 et un rotor 323. Le stator 322 comprend des aubes de stator montées fixes sur le carter 321. Le rotor 323 comprend des aubes de rotor propres à être entrainées en rotation par rapport aux aubes de stator par le flux de gaz d'échappement. Les aubes de rotor sont montées fixes sur l'arbre basse pression 33. Les aubes de rotor s'étendent dans la veine de circulation du flux primaire A en étant intercalées entre les aubes fixes.

De même, la turbine haute pression 42 comprend un carter de turbine haute pression 421, un stator 422 et un rotor 423. Le stator 422 comprend des aubes de stator montées fixes sur le carter 421. Le rotor 423 comprend des aubes de rotor propres à être entrainées en rotation par rapport aux aubes de stator par le flux de gaz d'échappement. Les aubes de rotor sont montées fixes sur l'arbre haute pression 42. Les aubes de rotor s'étendent dans la veine de circulation du flux primaire A en étant intercalées entre les aubes fixes.

Par ailleurs, le turboréacteur 1 comprend un carter d'entrée 8 (ou carter d'admission) disposé autour de la soufflante 2. Le carter d'entrée 8 comprend un redresseur 81 constitué d'une série d'aubes fixes 82, disposées en aval des aubes 22 de la soufflante 2 et ayant pour fonction de redresser le flux secondaire B généré par la soufflante 2. Le réducteur 7 est fixé sur le carter d'entrée 8.

Le turboréacteur 1 comprend en outre un carter inter-compresseur 9 disposé entre le compresseur basse pression 31 et le compresseur haute pression 41. Plus précisément, le carter inter-compresseur 9 relie le carter 311 du compresseur basse pression 31 au carter 411 du compresseur haute pression 41.

Le carter inter-compresseur 9 est prévu pour supporter les efforts axiaux transmis par le carter d'entrée 8, ces efforts axiaux étant générés par la soufflante 2 sur l'arbre de soufflante 23. Le carter inter-compresseur 9 transmet ces efforts axiaux à des suspensions (non-représentées) par le biais de bielles de reprises de poussée reliant le carter inter-compresseur 9 aux suspensions.

Le turboréacteur 1 comprend en outre un carter inter-turbine 10 disposé entre la turbine haute pression 42 et la turbine basse pression 32. Plus précisément, le carter inter-turbine 10 relie le carter 421 de la turbine haute pression 42 au carter 321 de la turbine basse pression 32.

Le turboréacteur 1 comprend en outre un carter d'échappement 11 et une tuyère d'échappement 6 fixée au carter d'échappement 11. La tuyère d'échappement 6 délimite un passage 62 pour des gaz d'échappement s'écoulant en aval de la turbine basse pression 32. Le carter d'échappement 11 est fixé au carter 321 de la turbine basse pression 32.

En fonctionnement, le flux d'air aspiré par la soufflante 2 est divisé en un flux primaire A et un flux secondaire B.

Le flux secondaire B traverse successivement la soufflante 2 et le redresseur 81.

Le flux primaire A traverse successivement le compresseur basse pression 31 et le compresseur haute pression 41. L'air sous pression est injecté dans la chambre de combustion 5 où il est utilisé comme comburant pour la combustion du carburant. Le flux de gaz d'échappement produit par réaction de combustion s'écoule successivement à travers la turbine haute pression 42, la turbine basse pression 32 et s'échappe du turboréacteur 1 via la tuyère d'échappement 6.

Le flux de gaz d'échappement entraine en rotation le rotor 422 de la turbine haute pression 42 et le rotor 322 la turbine basse pression 32. Le rotor 422 de la turbine haute pression 42 entraine à son tour le rotor 412 du compresseur haute pression 41 par le biais de l'arbre haute pression 43, tandis que le rotor 322 de la turbine basse pression 32 entraine le rotor 312 du compresseur basse pression 31 par le biais de l'arbre basse pression 33. Le rotor 322 de la turbine basse pression 32 entraine également le disque de soufflante 21 par le biais du réducteur 7 et de l'arbre de soufflante 23.

Comme illustré sur les figures 3 et 4, l'arbre de soufflante 23 est supporté par un premier palier d'arbre de soufflante S#1 (palier amont) et un deuxième palier d'arbre de soufflante S#2 (palier aval), chaque palier étant disposé entre l'arbre de soufflante 23 et le carter d'entrée 8. Le deuxième palier S#2 est un palier « de butée », c'est-à-dire qu'il est capable de transmettre au carter d'entrée 8 les efforts axiaux exercés (vers l'amont) par la soufflante 2 sur l'arbre de soufflante 23.

Dans le premier mode de réalisation illustré sur les figures 3 et 4, l'arbre basse pression 33 est supporté par trois paliers BP#1, BP#2, BP#3.

Le premier palier BP#1 est disposé entre l'arbre basse pression 33 et le carter d'échappement 11 (à proximité de l'extrémité avale de l'arbre basse pression 33).

Le premier palier BP#1 est un palier « de butée », c'est-à-dire qu'il est capable de transmettre les efforts axiaux exercés (vers l'aval) sur l'arbre basse pression 33 au carter d'échappement 11.

Plus précisément, le palier de butée BP#1 est capable de supporter à la fois des efforts radiaux et des efforts axiaux s'exerçant sur l'arbre basse pression 33. Le palier de butée BP#1 peut être constitué d'un roulement à billes ou d'une combinaison de plusieurs roulements à billes à contact oblique ou à rouleaux conique adjacents disposés en opposition selon une configuration en O ou en X.

A cet effet, le palier de butée BP#1 comprend une bague intérieure 351 fixée sur l'arbre basse pression 33, une bague extérieure 352 fixée sur le carter d'échappement 11 et des billes 353 ou des rouleaux coniques disposés entre la bague intérieure 352 et la bague extérieure 352.

Le deuxième palier BP#2 est disposé entre l'arbre basse pression 33 et le carter inter-compresseur 9.

Plus précisément, le palier BP#2 comprend une bague intérieure fixée sur l'arbre basse pression 33, une bague extérieure fixée sur le carter inter-compresseur 9 et des rouleaux disposés entre la bague intérieure et la bague extérieure.

Le troisième palier BP#3 est disposé entre l'arbre basse pression 33 et le carter inter-turbine 10.

Plus précisément, le palier BP#3 comprend une bague intérieure fixée sur l'arbre basse pression 33, une bague extérieure fixée sur le carter inter-turbine 10 et des rouleaux disposés entre la bague intérieure et la bague extérieure.

Chacun des paliers amont BP#2 et BP#3 est capable de supporter des efforts radiaux s'exerçant sur l'arbre basse pression 33 tout en autorisant un certain déplacement axial de l'arbre basse pression 33 par rapport au carter inter-compresseur 9 et au carter inter-turbine 10. Cela signifie que les paliers BP#2 et BP#3 ne transmettent aucun effort axial s'exerçant sur l'arbre basse pression 33 aux carters.

En effet, au cours du fonctionnement du turboréacteur 1, l'arbre basse pression 33 subit un déplacement axial par rapport au carter inter-compresseur 9 et au carter inter-turbine 10 du fait de la dilatation de certaines parties du turboréacteur 1, notamment du compresseur haute pression 41, de la chambre de combustion 5, de la turbine haute pression 42 et de la turbine basse pression 32.

Les paliers BP#2 et BP#3 sont ainsi conçus pour être en mesure d'autoriser un tel déplacement axial. A cet effet, chaque palier BP#2 et BP#3 peut être constitué d'un palier à rouleaux.

On notera que dans le mode de réalisation illustré sur les figures 3 et 4, le premier palier BP#1 remplace le quatrième palier BP#4 des figures 1 et 2, de sorte que seulement trois paliers sont nécessaires.

L'arbre haute pression 43 est également supporté par trois paliers HP#1, HP#2, HP#3.

Dans le mode de réalisation illustré sur les figures 3 et 4, le premier palier HP#1 est disposé entre l'arbre haute pression 43 et le carter inter-compresseur 9 (à proximité de l'extrémité amont de l'arbre haute pression 43).

Le premier palier HP#1 est un palier « de butée », c'est-à-dire qu'il est capable de transmettre les efforts axiaux exercés (vers l'aval) sur l'arbre haute pression au carter inter-compresseur 9.

Plus précisément, le palier de butée HP#1 est capable de supporter à la fois des efforts radiaux et des efforts axiaux s'exerçant sur l'arbre basse pression 43.

Le deuxième palier HP#2 est également disposé entre l'arbre haute pression 43 et le carter inter-compresseur 9, en aval du premier palier HP#1.

Le troisième palier HP#3 est disposé entre l'arbre haute pression 43 et le carter inter-turbine 10.

Tout comme les paliers BP#2 et BP#3, chacun des paliers HP#2 et HP#3 est capable de supporter des efforts radiaux s'exerçant sur l'arbre haute pression 43 tout en autorisant un certain déplacement axial de l'arbre haute pression 43 par rapport au carter inter-compresseur 9 et au carter inter-turbine 10. Cela signifie que les paliers HP#2 et HP#3 ne transmettent aucun effort axial s'exerçant sur l'arbre haute pression 43.

L'agencement du palier BP#1 au centre du carter d'échappement 11 a pour effet d'empêcher tout déplacement axial relatif entre l'extrémité avale de l'arbre basse pression 33 et le carter d'échappement 11.

Cet agencement permet avantageusement d'éviter ou de limiter le déplacement axial des aubes de rotor par rapport aux aubes de stator de la turbine basse pression 32, lors du fonctionnement du turboréacteur 1.

Il est donc possible de rapprocher axialement les aubes de rotor des aubes de stator, autorisant ainsi une conception de turbine plus compacte.

En outre, cet agencement simplifie la conception des dispositifs d'étanchéité dynamique (généralement constitués de léchettes et de revêtements en matériau abradable situés en regard) nécessaires pour éviter des fuites de gaz entre les aubes de rotor et la surface interne du carter 321 de la turbine basse pression 32. En effet, seules les fuites dues à des déplacements radiaux doivent être empêchées, des déplacements axiaux étant supprimés.

En revanche, lorsque le turboréacteur 1 est en fonctionnement, du fait de la dilatation de certaines parties du turboréacteur, l'extrémité amont de l'arbre basse pression 33 a tendance à se déplacer axialement par rapport au carter 311 du compresseur basse pression 31.

Cela a pour effet que le rotor 313 du compresseur basse pression 31 est déplacé par rapport au stator 312 du compresseur basse pression 31, parallèlement à l'axe X du turboréacteur 1, vers l'aval dans le sens de l'écoulement de l'air.

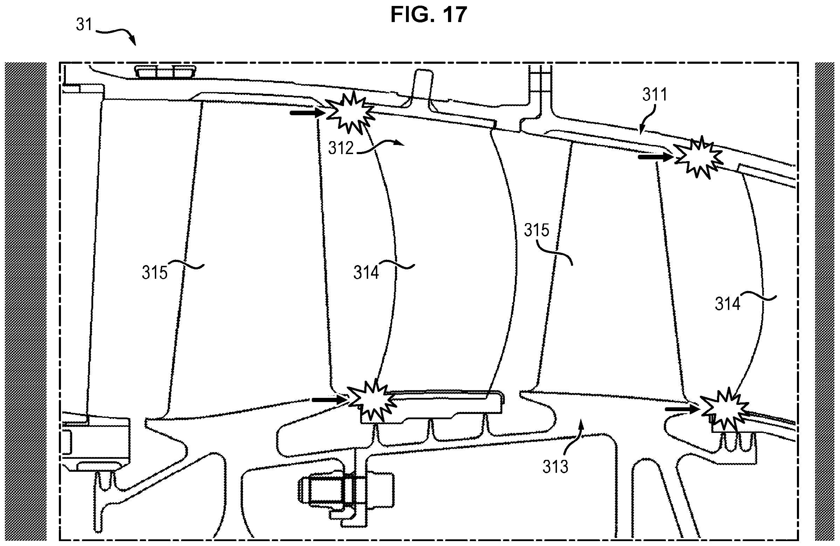

Comme illustré sur la figure 17, avec un agencement de compresseur basse pression conventionnel, il existerait un risque que les aubes 315 du rotor 313 du compresseur basse pression 31 viennent buter contre les aubes 314 du stator 312 et/ou contre le carter 311 du compresseur basse pression 31, ce qui dégraderait fortement les performances aérodynamiques du compresseur basse pression et donc celles du turboréacteur.

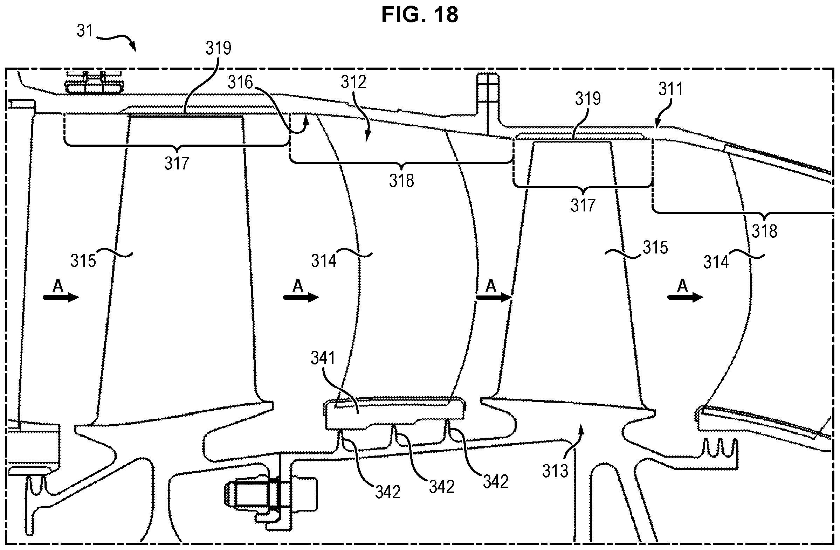

Pour remédier à ce problème, dans les modes de réalisation illustrés sur les figures 18 à 20, les aubes 315 du rotor 313 sont positionnées par rapport aux aubes 314 du stator 312 de manière à autoriser un déplacement axial (parallèlement à l'axe X) des aubes 315 du rotor 313, vers l'aval du turboréacteur 1 dans le sens d'écoulement de l'air, dans une plage de déplacement comprise entre 1 millimètre et 2 centimètres, de préférence entre 2 millimètres et 1 centimètre.

De plus, selon une première possibilité illustrée sur la figure 18, la surface interne 316 du carter de compresseur basse pression 311 présente, entre les aubes fixes 314, des portions de surface 317 de forme cylindrique de révolution, ayant l'axe X de rotation de l'arbre basse pression pour axe de révolution.

Chaque portion de surface 317 autorise le déplacement axial d'une aube 315 de rotor par rapport au carter de compresseur basse pression 311.

En revanche, la surface interne 316 du carter de compresseur basse pression 311 peut présenter, à l'endroit où sont fixées les aubes 314 du stator, des portions de surface 318 non-cylindriques de révolution.

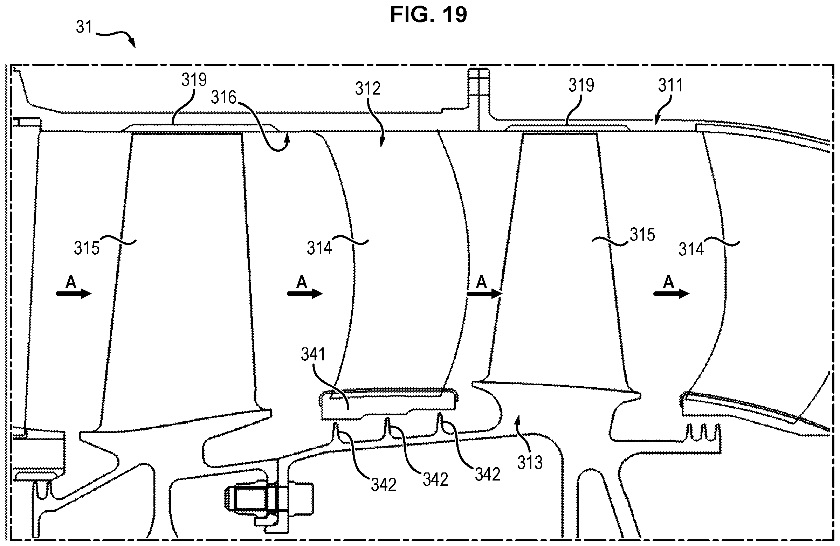

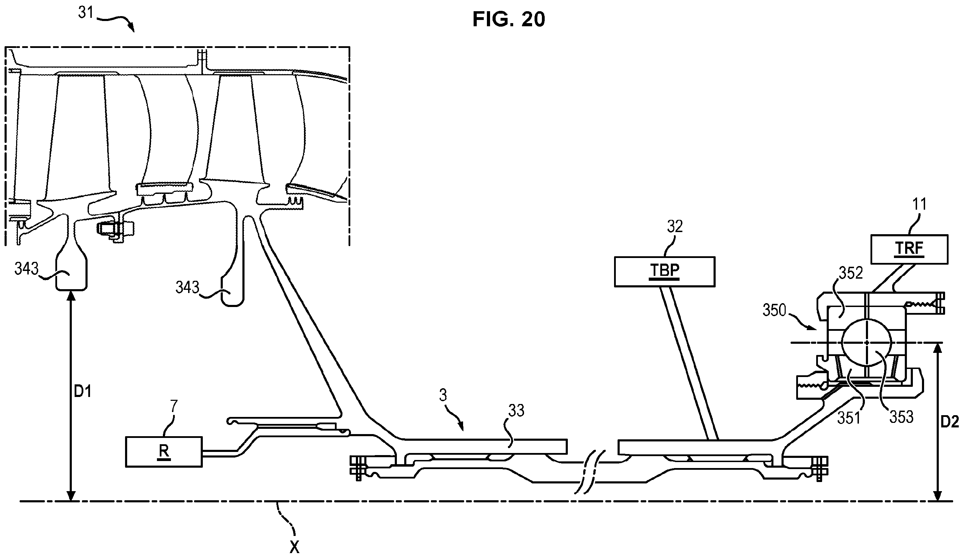

Selon une deuxième possibilité illustrée sur les figures 19 et 20, l'ensemble de la surface interne 316 du carter de compresseur basse pression 311 présente une forme cylindrique de révolution, ayant l'axe X de rotation de l'arbre basse pression pour axe de révolution.

La surface interne 316 autorise également le déplacement axial des aubes de rotor 314 par rapport au carter de compresseur basse pression 311.

De plus, comme illustré sur les figures 18 à 20, des revêtements 319 en matériau abradable sont prévus sur la surface interne 316 du carter de compresseur basse pression 311, en regard des bords d'extrémité libre des aubes de rotor 315. Chaque revêtement 319 en matériau abradable est dimensionné pour pouvoir être creusé par le bord d'extrémité de l'aube 315 situé en regard, lors d'un déplacement axial de celle-ci.

De même, chaque aube de stator 314 est munie d'un talon 343 1 formé en matériau abradable fixé au bord d'extrémité libre de l'aube, et le rotor 313 est muni de léchettes 342 disposées en regard du talon 341. Chaque talon 341 en matériau abradable est dimensionné pour pouvoir être creusé par les léchettes 342, lors d'un déplacement axial du rotor 313 par rapport au stator 312.

Par ailleurs, afin d'autoriser un déplacement axial de l'arbre basse pression 33 par rapport au réducteur 7, plusieurs solutions sont possibles.

Selon une première possibilité, l'arbre basse pression 33 est couplé avec l'arbre d'entrée du réducteur via un couplage autorisant une translation de l'arbre basse pression 33 par rapport à l'arbre d'entrée du réducteur 7.

Une solution consiste en particulier à munir l'extrémité amont de l'arbre basse pression 33 et l'extrémité de l'arbre d'entrée du réducteur 7 de cannelures longitudinales, les cannelures de l'arbre d'entrée du réducteur 7 coopérant avec les cannelures de l'arbre basse pression 33 de manière à rendre les deux arbres solidaires en rotation tout en autorisant une translation de l'un par rapport à l'autre. Les cannelures peuvent être des cannelures à billes.

Selon une deuxième possibilité, le réducteur 7 peut comprendre un train épicycloïdal conçu pour autoriser un déplacement de son planétaire intérieur ou de son planétaire extérieur par rapport aux satellites, par exemple grâce à des dentures droites.

De plus, comme illustré sur la figure 20, le rotor 313 du compresseur basse pression 31 comprend une série de disques 343. Chaque disque 343 présente un alésage circulaire central. Le « disque amont » est défini comme le disque 343 situé le plus en amont par rapport aux autres disques 343, dans le sens d'écoulement du flux d'air (flèche A). Le rayon D1 de l'alésage du disque amont 343 est défini comme la plus petite distance entre l'axe longitudinal X du turboréacteur 1 et le disque amont 343.

Si le premier palier BP#1 est constitué d'un roulement à billes 350, le rayon D2 du premier palier BP#1 est défini comme la distance entre l'axe longitudinal X du turboréacteur 1 et le centre d'une bille 353 du roulement à billes 350.

Les rayons D1 et D2 vérifient la condition suivante : D2 > 0,70 x D1, et de préférence D2> 0,75 x D1.

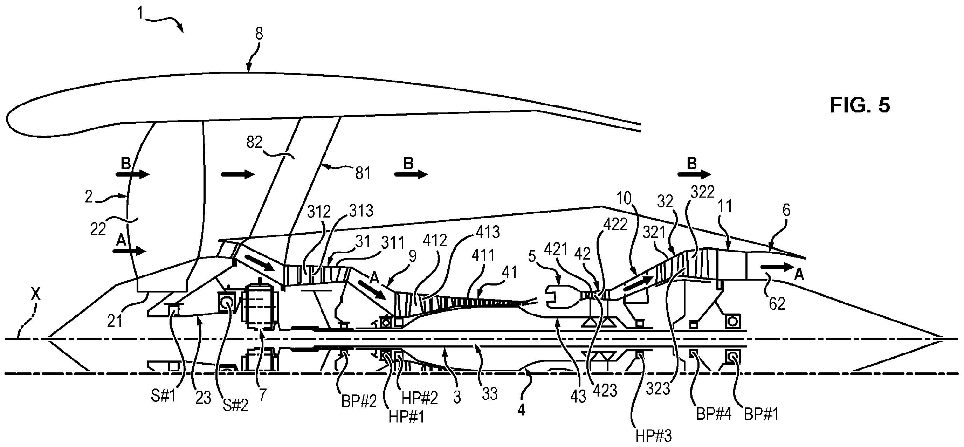

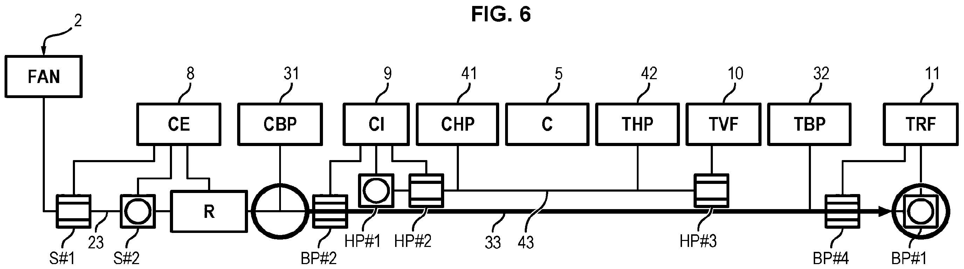

Les figures 5 et 6 représentent de manière schématique un turboréacteur à double corps conforme à un deuxième mode de réalisation de l'invention.

Ce deuxième mode de réalisation est identique au premier mode de réalisation, à l'exception des caractéristiques qui suivent :
Le turboréacteur 1 ne comprend pas de troisième palier BP#3 disposé entre l'arbre basse pression 33 et le carter inter-turbine 10.

A la place, le turboréacteur comprend un quatrième palier BP#4 disposé entre l'arbre basse pression 33 et le carter d'échappement 11, en amont du palier BP#1.

Plus précisément, le palier BP#4 comprend une bague intérieure fixée sur l'arbre basse pression 33, une bague extérieure fixée sur le carter d'échappement 11 et des rouleaux disposés entre la bague intérieure et la bague extérieure.

Le palier BP#4 est capable de supporter des efforts radiaux s'exerçant sur l'arbre basse pression 33 tout en autorisant un certain déplacement axial de l'arbre basse pression 33 par rapport au carter d'échappement 11. Cela signifie que le palier BP#4 ne transmet aucun effort axial s'exerçant sur l'arbre basse pression 33 aux carters.

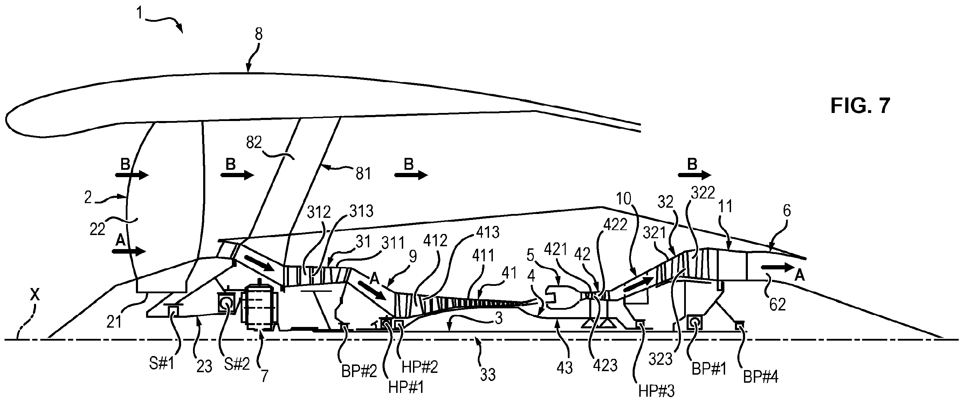

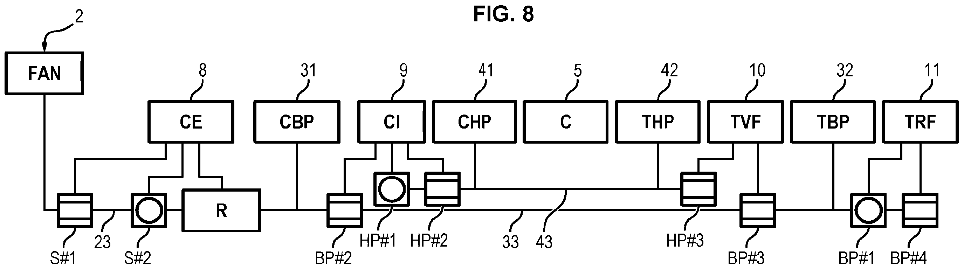

Les figures 7 et 8 représentent de manière schématique un turboréacteur à double corps conforme à un troisième mode de réalisation de l'invention.

Ce troisième mode de réalisation est identique au deuxième mode de réalisation, à l'exception des caractéristiques qui suivent :
Le quatrième palier BP#4 est disposé entre l'arbre basse pression 33 et le carter d'échappement 11, en aval du palier BP#1.

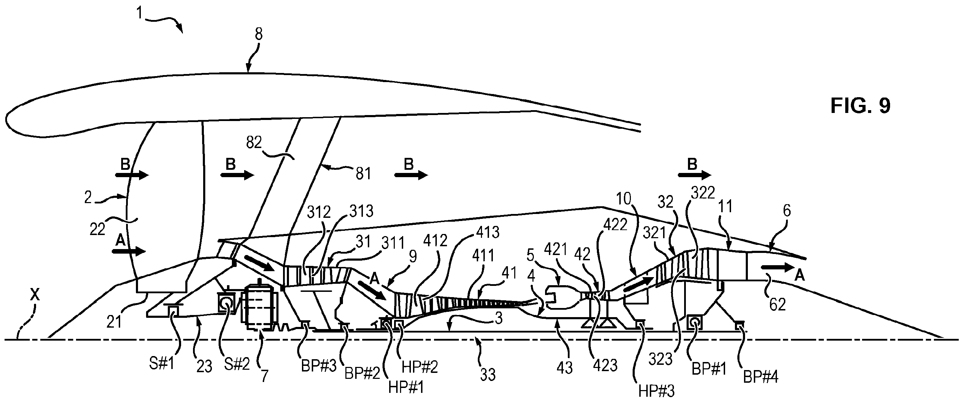

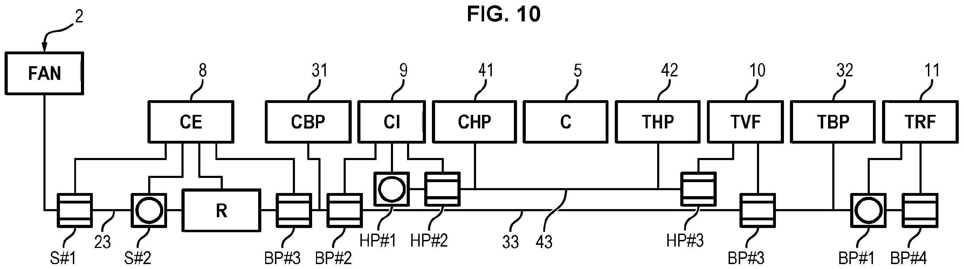

Les figures 9 et 10 représentent de manière schématique un turboréacteur à double corps conforme à un quatrième mode de réalisation de l'invention.

Ce quatrième mode de réalisation est identique au troisième mode de réalisation, à l'exception des caractéristiques qui suivent :
Le turboréacteur 1 comprend un troisième palier BP#3 disposé entre l'arbre basse pression 33 et le carter d'entrée 8 (à proximité de l'extrémité amont de l'arbre basse pression).

Le palier BP#3 est capable de supporter des efforts radiaux s'exerçant sur l'arbre basse pression 33 tout en autorisant un certain déplacement axial de l'arbre basse pression 33 par rapport au carter d'entrée 8. Cela signifie que le palier BP#3 ne transmet aucun effort axial s'exerçant sur l'arbre basse pression 33 aux carters.

Dans ce quatrième mode de réalisation, le turboréacteur 1 comprend ainsi quatre paliers BP#1 à BP#4 supportant l'arbre basse pression 33 : un premier palier BP#1 disposé entre l'arbre basse pression 33 et le carter d'échappement 11, un deuxième palier BP#2 disposé entre l'arbre basse pression 33 et le carter inter-compresseur 9, un troisième palier BP#3, disposé entre l'arbre basse pression 33 et le carter d'entrée 8 (à proximité de l'extrémité amont de l'arbre basse pression), et un quatrième palier BP#4, disposé entre l'arbre basse pression 33 et le carter d'échappement 11, en aval du premier palier BP#1.

Seul le premier palier BP#1 est un palier « de butée », c'est-à-dire qu'il est capable de supporter les efforts axiaux exercés (vers l'aval) par la turbine basse pression 3 sur l'arbre basse pression 33.

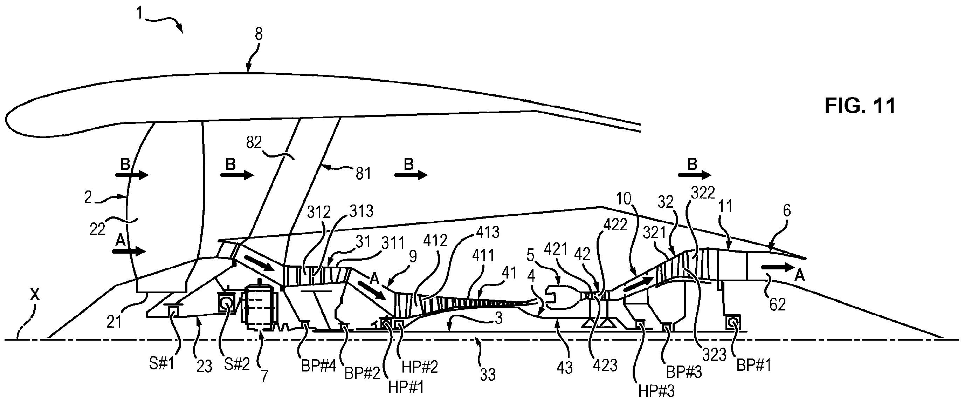

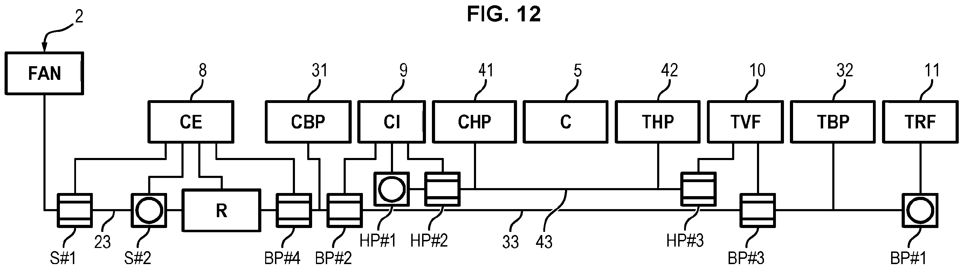

Les figures 11 et 12 représentent de manière schématique un turboréacteur à double corps conforme à un cinquième mode de réalisation de l'invention.

Ce cinquième mode de réalisation est identique au premier mode de réalisation, à l'exception des caractéristiques qui suivent :
Le turboréacteur 1 comprend un quatrième palier BP#4 disposé entre l'arbre basse pression 33 et le carter d'entrée 8 (à proximité de l'extrémité amont de l'arbre basse pression), en amont du deuxième palier BP#2.

Dans ce cinquième mode de réalisation, le turboréacteur 1 comprend ainsi quatre paliers BP#1 à BP#4 supportant l'arbre basse pression 33 : un premier palier BP#1 disposé entre l'arbre basse pression 33 et le carter d'échappement 11, un deuxième palier BP#2 disposé entre l'arbre basse pression 33 et le carter inter-compresseur 9, un troisième palier BP#3, disposé entre l'arbre basse pression 33 et le carter inter-turbine 10, en amont du premier palier BP#1, et un quatrième palier BP#4, disposé entre l'arbre basse pression 33 et le carter d'entrée 8 (à proximité de l'extrémité amont de l'arbre basse pression).

Seul le premier palier BP#1 est un palier « de butée », c'est-à-dire qu'il est capable de supporter les efforts axiaux exercés (vers l'aval) par la turbine basse pression 3 sur l'arbre basse pression 33.

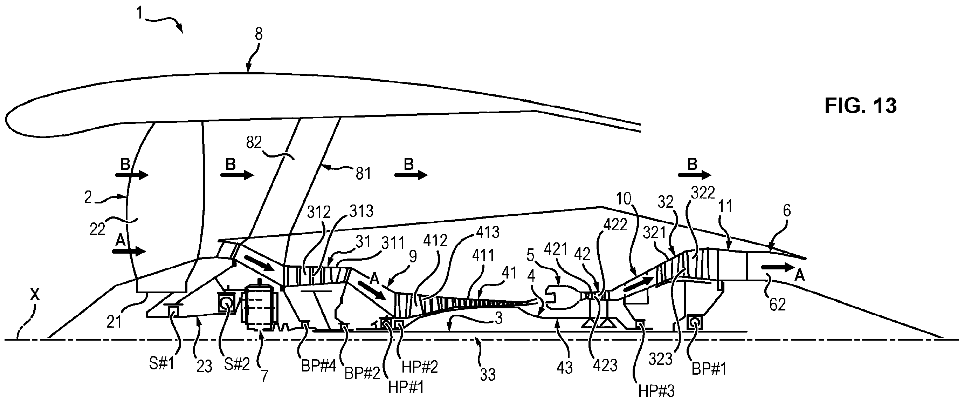

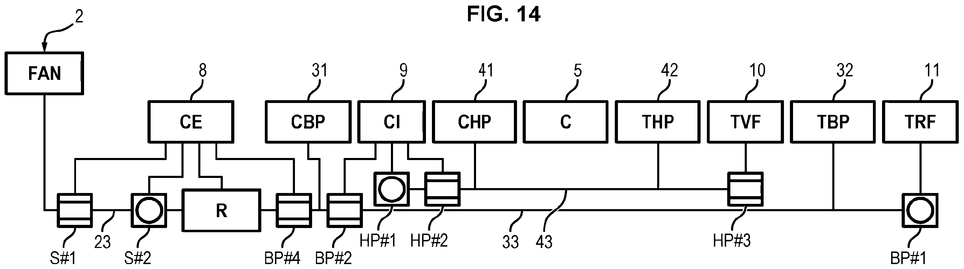

Les figures 13 et 14 représentent de manière schématique un turboréacteur à double corps conforme à un sixième mode de réalisation de l'invention.

Ce sixième mode de réalisation est identique au quatrième mode de réalisation, à l'exception des caractéristiques qui suivent :
Le turboréacteur 1 ne comprend pas de troisième palier BP#3 disposé entre l'arbre basse pression 33 et le carter inter-turbine 10.

Dans ce sixième mode de réalisation, le turboréacteur 1 comprend ainsi trois paliers BP#1, BP#2 et BP#4 supportant l'arbre basse pression 33 : un premier palier BP#1 disposé entre l'arbre basse pression 33 et le carter d'échappement 11, un deuxième palier BP#2 disposé entre l'arbre basse pression 33 et le carter inter-compresseur 9, et un quatrième palier BP#4, disposé entre l'arbre basse pression 33 et le carter d'entrée 8 (à proximité de l'extrémité amont de l'arbre basse pression).

Seul le premier palier BP#1 est un palier « de butée », c'est-à-dire qu'il est capable de supporter les efforts axiaux exercés (vers l'aval) par la turbine basse pression 3 sur l'arbre basse pression 33.

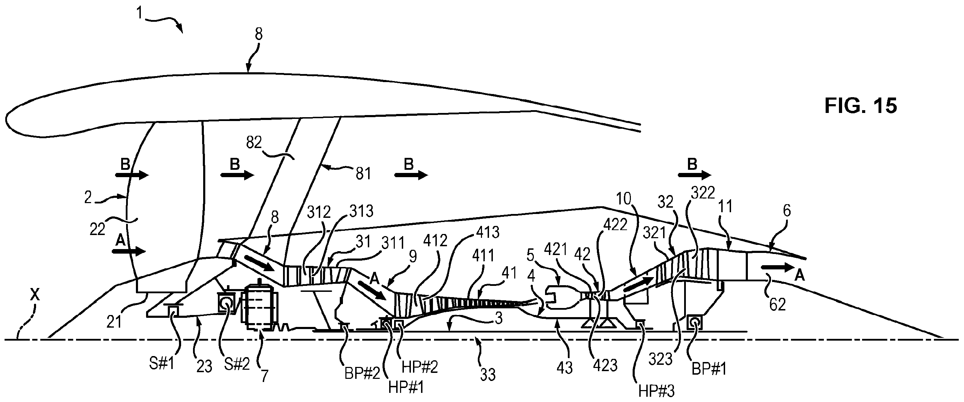

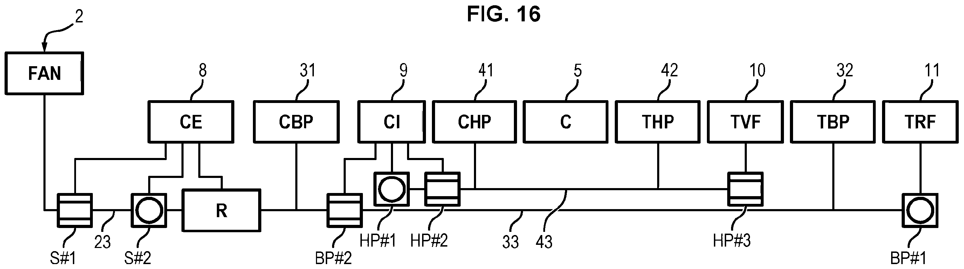

Les figures 15 et 16 représentent de manière schématique un turboréacteur à double corps conforme à un septième mode de réalisation de l'invention.

Ce septième mode de réalisation est identique au sixième mode de réalisation, à l'exception des caractéristiques qui suivent :
Le turboréacteur 1 ne comprend pas de quatrième palier BP#4 disposé entre l'arbre basse pression 33 et le carter d'entrée 8.

Dans ce septième mode de réalisation, le turboréacteur 1 comprend ainsi deux paliers BP#1 et BP#2 supportant l'arbre basse pression 33 : le premier palier BP#1 disposé entre l'arbre basse pression 33 et le carter d'échappement 11 et le deuxième palier BP#2 disposé entre l'arbre basse pression 33 et le carter inter-compresseur 9.

Le premier palier BP#1 est un palier « de butée », c'est-à-dire qu'il est capable de supporter les efforts axiaux exercés (vers l'aval) par la turbine basse pression 3 sur l'arbre basse pression 33. Le deuxième palier BP#2 est capable de supporter des efforts radiaux s'exerçant sur l'arbre basse pression 33 tout en autorisant un certain déplacement axial de l'arbre basse pression 33 par rapport au carter inter-compresseur 9. Cela signifie que le palier BP#2 ne transmet aucun effort axial s'exerçant sur l'arbre basse pression 33 aux carters.

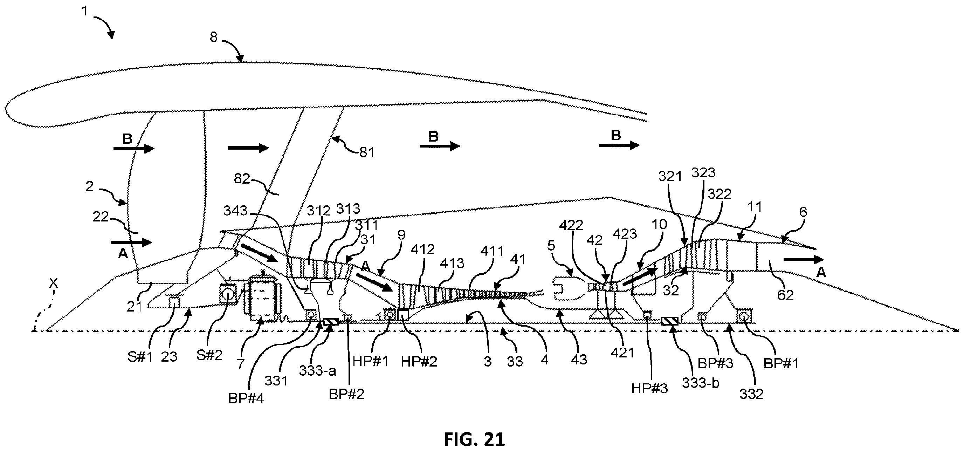

La figure 21 représente de manière schématique un turboréacteur à double corps conforme à un huitième mode de réalisation de l'invention.

Dans ce mode de réalisation, l'arbre basse pression 33 est formée en deux parties. L'arbre basse pression 33 comprend en effet une partie amont d'arbre basse pression 331, une partie avale d'arbre basse pression 332 et un ensemble d'accouplement 333 raccordant la partie avale d'arbre basse pression 332 et la partie amont d'arbre basse pression 331 entre elles.

L'ensemble d'accouplement 333 peut être positionné à proximité de l'extrémité amont de l'arbre basse pression 33 (position référencée 333-a sur la figure 21) ou à proximité de l'extrémité avale de l'arbre basse pression 33 (position référencée 333-b sur la figure 21). L'ensemble d'accouplement est adapté pour transmettre un couple entre la partie avale d'arbre basse pression 332 et la partie amont d'arbre basse pression 331, tout en autorisant un déplacement axial relatif entre la partie avale d'arbre basse pression 332 et la partie amont d'arbre basse pression 331 du fait de la dilatation de certaines parties du turboréacteur 1.

Dans ce mode de réalisation, l'arbre basse pression 33 est supporté par quatre paliers, incluant un premier palier BP#1, un deuxième palier BP#2, un troisième palier BP#3 et un quatrième palier BP#4.

Le premier palier BP#1 est disposé entre la partie avale de l'arbre basse pression 332 et le carter d'échappement 11. Le premier palier BP#1 est un palier « de butée », c'est-à-dire qu'il est capable de transmettre les efforts axiaux exercés sur la partie amont de l'arbre basse pression 331.

A cet effet, le palier de butée BP#1 comprend une bague intérieure fixée sur la partie avale de l'arbre basse pression 332, une bague extérieure fixée sur le carter d'échappement 11 et des billes ou des rouleaux coniques disposés entre la bague intérieure et la bague extérieure.

Le quatrième palier BP#4 est disposé entre la partie amont de l'arbre basse pression 331 et le carter d'entrée 8. Le quatrième palier BP#4 est également un palier «de butée », c'est-à-dire qu'il est capable de supporter des efforts axiaux.

A cet effet, le palier de butée BP#4 comprend une bague intérieure fixée sur la partie amont de l'arbre basse pression 331, une bague extérieure fixée sur le carter d'entrée 8 et des billes ou des rouleaux coniques disposés entre la bague intérieure et la bague extérieure.

Dans ce mode de réalisation, le palier BP#4 empêche tout déplacement axial relatif entre l'extrémité amont de l'arbre basse pression 33 et le carter d'entrée 8, tandis que le palier BP#1 empêche tout déplacement axial relatif entre l'extrémité avale de l'arbre basse pression 33 et le carter d'échappement 11.

L'ensemble d'accouplement 333 autorise toutefois un déplacement axial relatif entre la partie avale de l'arbre basse pression 332 et la partie amont de l'arbre basse pression 331.

Le deuxième palier BP#2 peut être disposé entre l'arbre basse pression 33 et le carter inter-compresseur 9.

Le troisième palier BP#3 est disposé entre l'arbre basse pression 33 et le carter d'échappement 11.

Le deuxième palier BP#2 et le troisième palier BP#3 sont capables de supporter des efforts radiaux s'exerçant sur l'arbre basse pression 33 tout en autorisant un certain déplacement axial de l'arbre basse pression 33 par rapport au carter inter-compresseur 9 et au carter d'échappement. Cela signifie que les paliers BP#2 et BP#3 ne transmettent aucun effort axial s'exerçant sur l'arbre basse pression 33 aux carters.

Selon une première possibilité illustrée sur la figure 21, l'ensemble d'accouplement 333 est positionné à proximité de l'extrémité amont de l'arbre basse pression 33 (dans cette position, l'ensemble d'accouplement est référencé 333-a sur la figure 21). Dans ce cas, l'ensemble d'accouplement 333 est disposé en aval de la jonction entre l'arbre basse pression 33 et le rotor 313 du compresseur basse pression 31.

Selon une deuxième possibilité illustrée sur la figure 21, l'ensemble d'accouplement 333 est positionné à proximité de l'extrémité aval de l'arbre basse pression 33 (dans cette position, l'ensemble d'accouplement est référencé 333-b). Dans ce cas, l'ensemble d'accouplement 333 est disposé en amont de la jonction entre l'arbre basse pression 33 et le rotor 323 de la turbine basse pression 32.

Dans ce mode de réalisation, le palier BP#4 peut être dimensionné de manière à présenter un encombrement inférieur au palier BP#1 d'un turboréacteur à double corps conventionnel tel que représenté sur les figures 1 et 2. En particulier, le palier BP#4 peut présenter un diamètre externe réduit et/ou des billes présentant un diamètre réduit.

En effet, la reprise des efforts axiaux s'exerçant sur l'arbre basse pression 33 est répartie entre le palier BP#1 et le palier BP#4. En particulier, le palier BP#4 ne reprend pas les efforts axiaux exercés sur l'arbre basse pression 33 par la turbine basse pression 32.

Du fait de son encombrement réduit, le quatrième palier BP#4 peut être disposé au centre du compresseur basse pression 31. Le compresseur basse pression 31 peut comprendre des disques 343 de rotor présentant un rayon d'alésage réduit. Il est ainsi possible de d'optimiser la forme des disques pour réduire leur poids et/ou diminuer le diamètre interne de la veine de compresseur.

En outre, dans ce mode de réalisation, le turboréacteur 1 comprend un carter de compresseur basse pression conventionnel tel que celui qui représenté sur la figure 17. En effet, le palier BP#4 interdit tout déplacement axial (parallèlement à l'axe X) des aubes 315 du rotor 313 du compresseur basse pression 31 par rapport aux aubes 314 du stator 312 ou par rapport au carter 311 du compresseur basse pression 31.

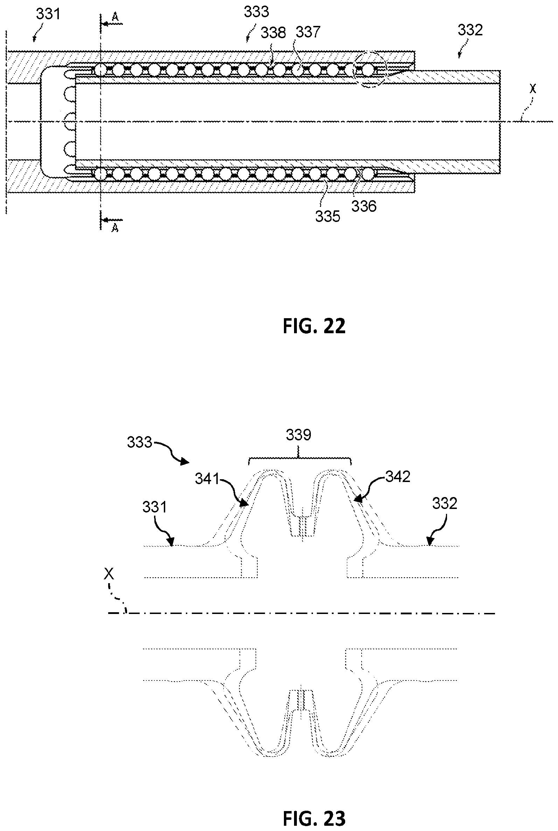

La figure 22 représente de manière schématique un premier exemple d'ensemble d'accouplement 333 permettant de raccorder entre elles la partie avale d'arbre basse pression 331 et la partie amont d'arbre basse pression 332.

Dans cet exemple, la partie amont d'arbre basse pression 331 comprend une surface interne 335 et de la partie avale d'arbre basse pression 332 comprend une surface externe 336. La surface interne 335 peut présenter une forme cylindrique de révolution ayant l'axe X pour axe de révolution. De même, la surface externe 336 peut présenter une forme cylindrique de révolution ayant l'axe X pour axe de révolution. La surface interne 335 entoure la surface externe 336. Bien entendu, il serait également possible de concevoir un ensemble d'accouplement 333 dans lequel la partie amont d'arbre basse pression 331 comprend une surface externe et de la partie avale d'arbre basse pression 332 comprend une surface interne entourant la surface externe de la partie amont d'arbre basse pression 331.

La surface interne 335 présente des premières cannelures axiales. De même, la surface externe 336 présente des deuxièmes cannelures axiales s'étendant en regard des premières cannelures axiales.

L'ensemble d'accouplement 333 comprend en outre une pluralité d'éléments roulants 337 (par exemple des billes) interposés entre la surface interne 335 et la surface externe 336. Chaque élément roulant 337 s'étend à la fois dans l'une des premières cannelures et dans l'une des deuxièmes cannelures. Les éléments roulants 337 sont propres à transmettre un couple entre la partie avale d'arbre basse pression 332 et la partie amont d'arbre basse pression 331, tout en autorisant un déplacement axial de l'une par rapport à l'autre parallèlement à l'axe X.

L'ensemble d'accouplement 333 comprend une cage 338 disposée entre la surface interne 335 et la surface externe 336. La cage 338 comprend une pluralité d'ouvertures, chaque ouverture recevant l'un des éléments roulants 337 pour maintenir les éléments roulants 337 espacés les uns des autres.

L'ensemble d'accouplement peut être un ensemble d'accouplement conforme à celui qui est décrit dans la demande de brevet FR n°1854044 déposée le 15 mai 2018 déposée au nom de Safran Aircraft Engines, qui est incorporée ici par référence.

La figure 23 représente de manière schématique un deuxième exemple d'ensemble d'accouplement 333.

Dans cet exemple, l'ensemble d'accouplement 333 comprend une portion de jonction à soufflets 339. La portion de jonction à soufflets 339 relie la partie amont d'arbre basse pression 331 à la partie aval d'arbre basse pression 332. La portion de jonction à soufflets 339 comprend une pluralité de soufflets propre à se déformer pour autoriser un déplacement axial relatif entre la partie amont d'arbre basse pression 331 et la partie aval d'arbre basse pression 332 parallèlement à l'axe X, tout en interdisant une rotation relative entre la partie amont d'arbre basse pression 331 et la partie aval d'arbre basse pression 332 autour de l'axe X.

Dans l'exemple illustré sur la figure 22, la portion de jonction à soufflets 339 comprend un premier soufflet 341 et un deuxième soufflet 342.

Sur la figure 22, la portion de jonction a soufflets 339 a été représentée en traits pleins dans une première position (ou position retractée) et en traits pointillés dans une deuxième position (ou position étirée.

## Revendications

1. Turboréacteur (1) à double corps comprenant :
- un corps basse pression (3), comprenant un compresseur basse pression (31), une turbine basse pression (32) et un arbre basse pression (33) reliant la turbine basse pression (32) au compresseur basse pression (31),
- un corps haute pression (4), comprenant un compresseur haute pression (41), une turbine haute pression (42) et un arbre haute pression (43) reliant la turbine haute pression (42) au compresseur haute pression (41), l'arbre basse pression (33) s'étendant à l'intérieur de l'arbre haute pression (43),
- un arbre de soufflante (23),
- un mécanisme de réduction (7) couplant l'arbre basse pression (33) et l'arbre de soufflante (23),
- un carter d'échappement (11) à travers lequel s'écoulent des gaz d'échappement en aval de la turbine basse pression (32),
le turboréacteur (1) étant **caractérisé en ce qu'**il comprend en outre un palier de butée d'arbre basse pression (BP#1) comprenant une bague intérieure et une bague extérieure, l'une des bagues étant fixée sur l'arbre basse pression (33) et l'autre des bagues étant fixée sur le carter d'échappement (11), et **en ce que**
le compresseur basse pression (31) comprend :
- un carter de compresseur basse pression (311) présentant une surface interne (316) délimitant une veine de circulation d'un flux d'air (A) à travers le compresseur basse pression (31),
- un stator (312) comprenant des aubes (314) montées fixes par rapport au carter de compresseur basse pression (311) et s'étendant dans la veine de circulation du flux d'air, et
- un rotor (313) comprenant des aubes mobiles (315) propres à être entraînées en rotation par rapport au stator (312) par l'arbre basse pression (33), les aubes mobiles (315) s'étendant dans la veine de circulation du flux d'air en étant intercalées entre les aubes fixes (314),
dans lequel la surface interne (316) du carter de compresseur basse pression (311), les aubes fixes (314) et les aubes mobiles (315) sont disposées les unes par rapport aux autres de manière à autoriser un déplacement axial des aubes mobiles (315) par rapport aux aubes fixes (314) parallèlement à l'axe de rotation (X) de l'arbre basse pression (33), et dans lequel la surface interne (316) du carter de compresseur basse pression (311) présente, entre les aubes fixes (314), des portions (317) de forme cylindrique de révolution, ayant l'axe de rotation (X) de l'arbre basse pression (33) pour axe de révolution.

2. Turboréacteur selon la revendication 1, comprenant en outre au plus deux paliers d'arbre basse pression additionnels (BP#2, BP#3), chaque palier d'arbre basse pression additionnel (BP#2, BP#3) comprenant une bague intérieure et une bague extérieure, l'une des bagues étant fixée sur l'arbre basse pression (33) et l'autre des bagues étant fixée sur un carter (9, 10) du turboréacteur (1).

3. Turboréacteur selon l'une des revendications 1 et 2, comprenant en outre un unique palier d'arbre basse pression additionnel (BP#2), le palier d'arbre basse pression additionnel (BP#2) comprenant une bague intérieure et une bague extérieure, l'une des bagues étant fixée sur l'arbre basse pression (33) et l'autre des bagues étant fixée sur un carter (9) du turboréacteur (1).

4. Turboréacteur selon l'une des revendications 2 et 3, dans lequel chaque palier d'arbre basse pression additionnel (BP#2, BP#3) comprend une bague intérieure ou une bague extérieure fixée sur un carter inter-compresseur (9) ou un carter inter-turbine (10) du turboréacteur.

5. Turboréacteur selon l'une des revendications 1 à 4, dans lequel le déplacement axial autorisé est compris entre 1 millimètre et 2 centimètres, de préférence entre 2 millimètres et 1 centimètre.

6. Turboréacteur selon l'une des revendications 1 à dans lequel la surface interne (316) du carter de compresseur basse pression (311) présente une forme cylindrique de révolution, ayant l'axe de rotation (X) de l'arbre basse pression (33) pour axe de révolution.

7. Turboréacteur selon l'une des revendications 1 à 6, dans lequel l'arbre basse pression (33) présente une extrémité amont munie de cannelures et le mécanisme de réduction (7) comprend un arbre d'entrée présentant une extrémité munie de cannelures, les cannelures de l'arbre d'entrée du mécanisme de réduction (7) coopérant avec les cannelures de l'arbre basse pression (33) de manière à rendre les deux arbres solidaires en rotation tout en autorisant une translation de l'un des arbres par rapport à l'autre.

8. Turboréacteur selon l'une des revendications 1 à 7, dans lequel le compresseur basse pression (31) comprend un disque amont de compresseur basse pression (343) ayant un alésage présentant un premier rayon (D1), et dans lequel le premier palier de butée d'arbre basse pression (BP#1) présente un deuxième rayon (D2) tel que : D2 > 0,70 × D1, de préférence D2 > 0,75 × D1, où D1 est le premier rayon et D2 est le deuxième rayon.

9. Turboréacteur (1) à double corps comprenant :
- un corps basse pression (3), comprenant un compresseur basse pression (31), une turbine basse pression (32) et un arbre basse pression (33) reliant la turbine basse pression (32) au compresseur basse pression (31),
- un corps haute pression (4), comprenant un compresseur haute pression (41), une turbine haute pression (42) et un arbre haute pression (43) reliant la turbine haute pression (42) au compresseur haute pression (41), l'arbre basse pression (33) s'étendant à l'intérieur de l'arbre haute pression (43),
- un arbre de soufflante (23),
- un mécanisme de réduction (7) couplant l'arbre basse pression (33) et l'arbre de soufflante (23),
- un carter d'échappement (11) à travers lequel s'écoulent des gaz d'échappement en aval de la turbine basse pression (32),
le turboréacteur (1) étant **caractérisé en ce qu'**il comprend en outre un premier palier de butée d'arbre basse pression (BP#1) comprenant une bague intérieure et une bague extérieure, l'une des bagues étant fixée sur l'arbre basse pression (33) et l'autre des bagues étant fixée sur le carter d'échappement (11), et un deuxième palier de butée d'arbre basse pression (BP#4) comprenant une bague intérieure et une bague extérieure, l'une des bagues étant fixée sur l'arbre basse pression (33) et l'autre des bagues étant fixée sur le carter d'entrée (8),
et **en ce que** l'arbre basse pression (33) comprend une partie amont d'arbre basse pression (331), une partie aval d'arbre basse pression (332), et un ensemble d'accouplement (333) adapté pour transmettre un couple entre la partie amont d'arbre basse pression (331) et la partie aval d'arbre basse pression (332) tout en autorisant un déplacement axial relatif entre la partie amont d'arbre basse pression (331) et la partie aval d'arbre basse pression (332).

## Patentansprüche

1. Zweiwellen-Mantelstrom-Triebwerk (1), das umfasst:
- einen Niederdruckmantel (3), der einen Niederdruckverdichter (31), eine Niederdruckturbine (32) und eine Niederdruckwelle (33) umfasst, die die Niederdruckturbine (32) mit dem Niederdruckverdichter (31) verbindet;
- einen Hochdruckmantel (4), der einen Hochdruckverdichter (41), eine Hochdruckturbine (42) und eine Hochdruckwelle (43) umfasst, die die Hochdruckturbine (42) mit dem Hochdruckverdichter (41) verbindet, wobei die Niederdruckwelle (33) sich im Inneren der Hochdruckwelle (43) erstreckt,
- eine Gebläsewelle (23),
- einen Untersetzungsmechanismus (7), der die Niederdruckwelle (33) und die Gebläsewelle (23) koppelt,
- ein Abgasgehäuse (11), durch das Abgase stromabwärtig der Niederdruckturbine (32) ausströmen,
wobei das Triebwerk (1) **dadurch gekennzeichnet ist, dass** es ferner ein Niederdruckwellen-Schublager (BP#1) umfasst, das einen inneren Ring und einen äußeren Ring umfasst, wobei der eine von den Ringen an der Niederdruckwelle (33) befestigt ist und der andere von den Ringen an dem Abgasgehäuse (11) befestigt ist, und dadurch, dass
der Niederdruckverdichter (31) umfasst:
- ein Niederdruck-Verdichtergehäuse (311), das eine Innenoberfläche (316) aufweist, die einen Zirkulationsgang einer Luftströmung (A) durch den Niederdruckverdichter (31) abgrenzt,
- einen Stator (312), der Schaufeln (314) umfasst, die in Bezug auf das Niederdruck-Verdichtergehäuse (311) fest montiert sind und sich in dem Zirkulationsgang der Luftströmung erstrecken, und
- einen Rotor (313), der bewegliche Schaufeln (315) umfasst, die geeignet sind, durch die Niederdruckwelle (33) in Bezug auf den Stator (312) drehbar angetrieben zu werden, wobei die beweglichen Schaufeln (315) sich in dem Zirkulationsgang der Luftströmung erstrecken und dabei zwischen den festen Schaufeln (314) eingeschoben sind,
wobei die Innenoberfläche (316) des Niederdruck-Vedichtergehäuses (311), die festen Schaufeln (314) und die beweglichen Schaufeln (315) derart in Bezug aufeinander angeordnet sind, dass eine axiale Verlagerung der beweglichen Schaufeln (315) in Bezug auf die festen Schaufeln (314) parallel zur Drehachse (X) der Niederdruckwelle (33) zugelassen wird und
wobei die Innenoberfläche (316) des Niederdruck-Verdichtergehäuses (311) zwischen den festen Schaufeln (314) Abschnitte (317) mit zylindrischer Umlaufform aufweist, die die Drehachse (X) der Niederdruckwelle (33) als Umlaufachse aufweisen.

2. Triebwerk nach Anspruch 1, das ferner höchstens zwei zusätzliche Niederdruckwellenlager (BP#2, BP#3) umfasst, wobei jedes zusätzliche Niederdruckwellenlager (BP#2, BP#3) einen inneren Ring und einen äußeren Ring umfasst, wobei der eine von den Ringen an der Niederdruckwelle (33) befestigt ist und der andere von den Ringen an einem Gehäuse (9, 10) des Triebwerks (1) befestigt ist.

3. Triebwerk nach einem der Ansprüche 1 und 2, das ferner ein einziges zusätzliches Niederdruckwellenlager (BP#2) umfasst, wobei das zusätzliche Niederdruckwellenlager (BP#2) einen inneren Ring und einen äußeren Ring umfasst, wobei der eine von den Ringen an der Niederdruckwelle (33) befestigt ist und der andere von den Ringen an einem Gehäuse (9) der Turbomaschine (1) befestigt ist.

4. Triebwerk nach einem der Ansprüche 2 und 3, wobei jedes zusätzliche Niederdruckwellen-Schublager (BP#2, BP#3) einen inneren Ring oder einen äußeren Ring umfasst, der an einem Zwischenverdichtergehäuse (9) oder einem Zwischenturbinengehäuse (10) des Triebwerks befestigt ist.

5. Triebwerk nach einem der Ansprüche 1 bis 4, wobei die zugelassene axiale Verlagerung zwischen 1 Millimeter und 2 Zentimeter, vorzugsweise zwischen 2 Millimeter und 1 Zentimeter beträgt.

6. Triebwerk nach einem der Ansprüche 1 bis 5, wobei die Innenoberfläche (316) des Niederdruck-Verdichtergehäuses (311) eine zylindrische Umlaufform aufweist, die die Drehachse (X) der Niederdruckwelle (33) als Umlaufachse aufweist.

7. Triebwerk nach einem der Ansprüche 1 bis 6, wobei die Niederdruckwelle (33) ein stromaufwärtiges Ende aufweist, das mit Rillen versehen ist, und der Untersetzungsmechanismus (7) eine Eingangswelle umfasst, die ein mit Rillen versehenes Ende aufweist, wobei die Rillen der Eingangswelle des Untersetzungsmechanismus (7) derart mit den Rillen der Niederdruckwelle (33) zusammenwirken, dass die zwei Wellen drehfest werden und dabei eine translatorische Bewegung der einen Welle in Bezug auf die andere zugelassen wird.

8. Triebwerk nach einem der Ansprüche 1 bis 7, wobei der Niederdruckverdichter (31) eine stromaufwärtige Niederdruck-Verdichterscheibe (343) umfasst, die eine Bohrung aufweist, die einen ersten Radius (D1) aufweist, und wobei das erste Niederdruckwellen-Schublager (BP#1) einen zweiten Radius (D2) aufweist, derart dass: D2 > 0,70 × D1, vorzugsweise D2 > 0,75 × D1, wobei D1 der erste Radius ist und D2 der zweite Radius ist.

9. Zweiwellen-Mantelstrom-Triebwerk (1), das umfasst:
- einen Niederdruckmantel (3), der einen Niederdruckverdichter (31), eine Niederdruckturbine (32) und eine Niederdruckwelle (33) umfasst, die die Niederdruckturbine (32) mit dem Niederdruckverdichter (31) verbindet;
- einen Hochdruckmantel (4), der einen Hochdruckverdichter (41), eine Hochdruckturbine (42) und eine Hochdruckwelle (43) umfasst, die die Hochdruckturbine (42) mit dem Hochdruckverdichter (41) verbindet, wobei die Niederdruckwelle (33) sich im Inneren der Hochdruckwelle (43) erstreckt,
- eine Gebläsewelle (23),
- einen Untersetzungsmechanismus (7), der die Niederdruckwelle (33) und die Gebläsewelle (23) koppelt,
- ein Abgasgehäuse (11), durch das Abgase stromabwärtig der Niederdruckturbine (32) ausströmen,
wobei das Triebwerk (1) **dadurch gekennzeichnet ist, dass** es ferner ein erstes Niederdruckwellen-Schublager (BP#1), das einen inneren Ring und einen äußeren Ring umfasst, wobei der eine von den Ringen an der Niederdruckwelle (33) befestigt ist und der andere von den Ringen an dem Abgasgehäuse (11) befestigt ist, und ein zweites Niederdruckwellen-Schublager (BP#4) umfasst, das einen inneren Ring und einen äußeren Ring umfasst, wobei der eine von den Ringen an der Niederdruckwelle (33) befestigt ist und der andere von den Ringen am Eingangsgehäuse (8) befestigt ist,
und dadurch, dass die Niederdruckwelle (33) einen stromaufwärtigen Niederdruckwellenteil (331), einen stromabwärtigen Niederdruckwellenteil (332) und eine Kopplungsbaugruppe (333) umfasst, die dazu geeignet ist, ein Drehmoment zwischen dem stromaufwärtigen Niederdruckwellenteil (331) und dem stromabwärtigen Niederdruckwellenteil (332) zu übertragen und dabei eine relative axiale Verlagerung zwischen dem stromaufwärtigen Niederdruckwellenteil (331) und dem stromabwärtigen Niederdruckwellenteil (332) zuzulassen.

## Claims

1. A twin-spool turbojet engine (1) comprising:
- a low-pressure spool (3), comprising a low-pressure compressor (31), a low-pressure turbine (32) and a low-pressure shaft (33) connecting the low-pressure turbine (32) to the low-pressure compressor (31),
- a high-pressure spool (4), comprising a high-pressure compressor (41), a high-pressure turbine (42) and a high-pressure shaft (43) connecting the high-pressure turbine (42) to the high-pressure compressor (41), the low-pressure shaft (33) extending inside the high-pressure shaft (43),
- a fan shaft (23),
- a reduction mechanism (7) coupling the low-pressure shaft (33) and the fan shaft (23),
- an exhaust casing (11) through which exhaust gases flow downstream of the low-pressure turbine (32),
the turbojet engine (1) being **characterized in that** it further comprises a low-pressure shaft thrust bearing (BP#1) comprising an inner ring and an outer ring, one of the rings being fastened on the low-pressure shaft (33) and the other of the rings being fastened on the exhaust casing (11), and **in that**
the low-pressure compressor (31) comprises:
- a low-pressure compressor casing (311) having an inner surface (316) delimiting a flow path of an air flow (A) through the low-pressure compressor (31),
- a stator (312) comprising blades (314) mounted stationary relative to the low-pressure compressor casing (311) and extending in the flow path of the air flow, and
- a rotor (313) comprising movable blades (315) capable of being driven in rotation relative to the stator (312) by the low-pressure shaft (33), the movable blades (315) extending in the flow path of the air flow while being interposed between the stationary blades (314),
wherein the inner surface (316) of the low-pressure compressor casing (311), the stationary blades (314) and the movable blades (315) are disposed relative to each other so as to allow an axial displacement of the movable blades (315) relative to the stationary blades (314) parallel to the axis of rotation (X) of the low-pressure shaft (33), and wherein the inner surface (316) of the low-pressure compressor casing (311) has, between the stationary blades (314), portions (317) of cylindrical shape of revolution, having the axis of rotation (X) of the low-pressure shaft (33) as axis of revolution.

2. The turbojet engine according to claim 1, further comprising at most two additional low-pressure shaft bearings (BP#2, BP#3), each additional low-pressure shaft bearing (BP#2, BP#3) comprising an inner ring and an outer ring, one of the rings being fastened on the low-pressure shaft (33) and the other of the rings being fastened on a casing (9, 10) of the turbojet engine (1) .

3. The turbojet engine according to one of claims 1 and 2, further comprising a single additional low-pressure shaft bearing (BP#2), the additional low-pressure shaft bearing (BP#2) comprising an inner ring and an outer ring, one of the rings being fastened on the low-pressure shaft (33) and the other of the rings being fastened on a casing (9) of the turbojet engine (1) .

4. The turbojet engine according to one of claims 2 and 3, wherein each additional low-pressure shaft bearing (BP#2, BP#3) comprises an inner ring or an outer ring fastened on an inter-compressor casing (9) or an inter-turbine casing (10) of the turbojet engine.

5. The turbojet engine according to one of claims 1 to 5, wherein the authorized axial displacement is comprised between 1 millimeter and 2 centimeters, preferably between 2 millimeters and 1 centimeter.

6. The turbojet engine according to one of claims 1 to 5, wherein the inner surface (316) of the low-pressure compressor casing (311) has a cylindrical shape of revolution, having the axis of rotation (X) of the low-pressure shaft (33) as axis of revolution.

7. The turbojet engine according to one of claims 1 to 6, wherein the low-pressure shaft (33) has an upstream end provided with splines and the reduction mechanism (7) comprises an input shaft having an end provided with splines, the splines of the input shaft of the reduction mechanism (7) cooperating with the splines of the low-pressure shaft (33) so as to secure the two shafts in rotation while allowing a translation of one of the shafts relative to the other.

8. The turbojet engine according to one of claims 1 to 7, wherein the low-pressure compressor (31) comprises an upstream disc (343) of a low-pressure compressor having a bore having a first radius (D1), and wherein the first low-pressure shaft thrust bearing (BP#1) has a second radius (D2) such that: D2 > 0.70 × D1, preferably D2 > 0.75 × D1, where D1 is the first radius and D2 is the second radius.

9. A twin-spool turbojet engine (1) comprising:
- a low-pressure spool (3), comprising a low-pressure compressor (31), a low-pressure turbine (32) and a low-pressure shaft (33) connecting the low-pressure turbine (32) to the low-pressure compressor (31),
- a high-pressure spool (4), comprising a high-pressure compressor (41), a high-pressure turbine (42) and a high-pressure shaft (43) connecting the high-pressure turbine (42) to the high-pressure compressor (41), the low-pressure shaft (33) extending inside the high-pressure shaft (43),
- a fan shaft (23),
- a reduction mechanism (7) coupling the low-pressure shaft (33) and the fan shaft (23),
- an exhaust casing (11) through which exhaust gases flow downstream of the low-pressure turbine (32),
the turbojet engine (1) being **characterized in that** it further comprises a first low-pressure shaft thrust bearing (BP#1) comprising an inner ring and an outer ring, one of the rings being fastened on the low-pressure shaft (33) and the other of the rings being fastened on the exhaust casing (11), and a second low-pressure shaft thrust bearing (BP#4) comprising an inner ring and an outer ring, one of the rings being fastened on the low-pressure shaft (33) and the other of the rings being fastened on the inlet casing (8),
and **in that** the low-pressure shaft (33) comprises a low-pressure shaft upstream portion (331), a low-pressure shaft downstream portion (332), and a coupling assembly (333) adapted to transmit a torque between the low-pressure shaft upstream portion (331) and the low-pressure shaft downstream portion (332) while allowing a relative axial displacement between the low-pressure shaft upstream portion (331) and the low-pressure shaft downstream portion (332).
